# EUROPEAN PATENT APPLICATION

(11) **EP 2 624 583 A1**
(43) Date of publication of application: **07.08.2013**
(21) Application number: 13151017.4
(22) Date of filing: 11.01.2013
(51) Int. Cl.: H04N 21/436, H04N 21/41, G06F 9/445

(54) **Display apparatus, upgrading apparatus, control method thereof and display system**

(30) Priority: 31.01.2012 KR 20120009419
(71) Applicant: Samsung Electronics Co., Ltd., Gyeonggi-do 443-742 (KR)
(72) Inventor: Kim, Moon-soo, Gyeonggi-do (KR)
(74) Representative: Davies, Robert Ean

(57) **Abstract**

The display apparatus includes: an image processor which processes an image signal; a display which displays an image based on the processed image signal; an interface to which an upgrading apparatus for processing the image signal is connected; and a controller which controls the interface to cut off power supplied to the upgrading apparatus upon receiving a user's selection to change the upgrading apparatus mode from an active mode to a passive mode. Thus, the active and passive modes of the upgrading apparatus are changed without removing the upgrading apparatus and without rebooting the display apparatus, thereby improving user's convenience.

## Description

### BACKGROUND OF INVENTION

### Field

Apparatuses and methods consistent with exemplary embodiments relate to a display apparatus, an upgrading apparatus, a control method thereof and a display system, and more particularly, to a display apparatus, an upgrading apparatus, a control method thereof and a display system in which the upgrading apparatus is connected to the display apparatus.

### Description of the Related Art

A display apparatus processes image signals and/or image data transmitted by various image supply sources or stored in the display apparatus to display an image on a display panel. A display apparatus may include a television (TV) or a monitor. The TV provides a user with an image of a desired broadcasting channel by processing a broadcasting image transmitted from the outside, through various image processing operations such as decoding, scaling, etc.

The display apparatus has an image processing board installed therein and including various chips and memories to perform the image processing operations.

As technology has developed and user's demands have become diverse, functions of the display apparatus became complex. To improve functions of the existing display apparatus, i.e., to upgrade the display apparatus already owned by a user, the upgrade of the hardware and software may be needed.

However, upgrading the hardware of the display apparatus may require replacement of the image processing board built in the display apparatus or some components of the image processing board, which is not easy from both the manufacturer's and user's perspectives. Further, more advanced software needs to be driven by the hardware designed corresponding to such software. As a result, a user may need to acquire an upgraded new display apparatus or an upgrading apparatus.

An upgrading apparatus is an apparatus which is connected to the display apparatus to upgrade hardware and/or software, and may perform image processing operations. During such operations, the existing image processing board of the existing display apparatus becomes an unused spare resource.

Accordingly, if a user desires to subsequently use an existing image processing board of the display apparatus, the user needs to remove the connected upgrading apparatus and reboot the display apparatus, which causes an inconvenience to the user.

### SUMMARY

Exemplary embodiments may address at least the above problems and/or disadvantages and other disadvantages not described above.

According to an aspect of an exemplary embodiment, there is provided a display apparatus including: an image processor which processes an image signal; a display unit which displays thereon an image based on the processed image signal; an interface to which an upgrading apparatus processing the image signal is connected; and a controller which controls the interface to cut off power supplied to the upgrading apparatus upon receiving a user's selection to change the upgrading apparatus from an active mode to a passive mode.

The controller may recognize the connected upgrading apparatus as a storage medium if the upgrading apparatus is changed to a passive mode.

The controller may control the image processor to process the image signal rather than transmitting the image signal to the upgrading apparatus if the upgrading apparatus is changed to a passive mode.

The controller may control the interface to supply power to the upgrading apparatus upon receiving a user's input to change the upgrading apparatus from the passive mode to the active mode.

If the upgrading apparatus is changed to the active mode, the controller may control the interface to transmit the image signal to the upgrading apparatus and to receive the processed image signal from the upgrading apparatus, and may control the display unit to display an image corresponding to the received image signal.

The display apparatus may further include a user input unit which receives a user's input regarding change of the mode of the upgrading apparatus.

The controller controls the display unit to display a user interface thereon for the change of the mode of the upgrading apparatus.

The interface receives a command from the upgrading apparatus regarding the change of the mode of the upgrading apparatus.

According to an aspect of an exemplary embodiment, there is provided a display apparatus including: an image processor which processes an image signal; an interface to which an upgrading apparatus processing the image signal is connected; and a controller which upon receiving a user's selection to change the upgrading apparatus from a passive mode to an active mode, controls the interface to supply power to the upgrading apparatus, transmit the image signal to the upgrading apparatus and receive the processed image signal from the upgrading apparatus, and controls the display unit to display thereon an image corresponding to the received image signal.

According to an aspect of an exemplary embodiment, there is provided an upgrading apparatus of a display apparatus including: an interface which is connected to the display apparatus displaying an image; an image processor which processes an image signal corresponding to an image displayed in the display apparatus; and a controller which upon receiving a user's selection to change the upgrading apparatus from an active mode to a passive mode, controls the interface to transmit a command to process an image signal by the image processor of the display apparatus.

Upon receiving a user's input to change the upgrading apparatus from the passive mode to the active mode, the controller may boot the upgrading apparatus, may control the image processor to receive from the display apparatus and process an image signal, and may control the interface to transmit the processed image signal to the display apparatus.

The upgrading apparatus may further include a user input unit which receives a user's selection for a change of a mode of the upgrading apparatus.

The interface may receive a command from the display apparatus to change the mode of the upgrading apparatus.

According to an aspect of an exemplary embodiment, there is provided an upgrading apparatus of a display apparatus including: an interface which is connected to the display apparatus displaying an image; an image processor which processes an image signal corresponding to an image displayed in the display apparatus; and a controller which upon receiving a user's selection to change the upgrading apparatus from a passive mode to an active mode, boots the upgrading apparatus, controls the image processor to receive from the display apparatus and process an image signal, and controls the interface to transmit the processed image signal to the display apparatus.

According to an aspect of an exemplary embodiment, there is provided a control method of a display apparatus including: receiving a user's selection to change an upgrading apparatus connected to the display apparatus and processing an image signal, from an active mode to a passive mode; and cutting off power supplied to the upgrading apparatus.

The control method may further include recognizing the connected upgrading apparatus as a storage medium if the upgrading apparatus is changed to a passive mode.

The control method may further include processing the image signal by the image processor rather than transmitting the image signal to the upgrading apparatus; and displaying an image corresponding to the processed image signal.

The control method may further including receiving a user's input to change the upgrading apparatus from the passive mode to the active mode; and supplying power to the upgrading apparatus.

The control method may further include transmitting an image signal from an image supply source to the upgrading apparatus; receiving the processed image signal from the upgrading apparatus; and displaying an image corresponding to the received image signal.

The receiving the user's selection may include receiving a user's selection from a user input unit of the display apparatus regarding the change of the mode.

The control method may further include displaying a user interface for the change of the mode of the upgrading apparatus.

The receiving the user's selection may include receiving a command from the upgrading apparatus to change the mode of the upgrading apparatus.

According to an aspect of an exemplary embodiment, there is provided a control method of a display apparatus including: receiving a user's selection to change an upgrading apparatus connected to the display apparatus and processing an image signal, from a passive mode to an active mode; supplying power to the upgrading apparatus; transmitting the image signal to the upgrading apparatus; receiving the processed image signal from the upgrading apparatus; and displaying an image corresponding to the received image signal.

According to an aspect of an exemplary embodiment, there is provided a control method of an upgrading apparatus of a display apparatus, the control method including: receiving a user's selection to change the upgrading apparatus connected to the display apparatus and processing an image signal, from an active mode to a passive mode; and transmitting a command to the display apparatus to process an image signal by an image processor of the display apparatus.

The control method may further including: receiving a user's input to change the upgrading apparatus from the passive mode to the active mode; booting the upgrading apparatus; receiving an image signal from the display apparatus; processing the received image signal; and transmitting the processed image signal to the display apparatus.

The receiving the user's selection may include receiving a user's selection regarding the change of the mode through a user input unit of the upgrading apparatus.

The receiving the user's selection may include receiving a command from the display apparatus to change the mode of the upgrading apparatus.

According to an aspect of an exemplary embodiment, there is provided a control method of an upgrading apparatus of a display apparatus, the control method including: receiving a user's selection to change the upgrading apparatus connected to the display apparatus and processing an image signal, from a passive mode to an active mode; booting the upgrading apparatus; receiving an image signal from the display apparatus; processing the received image signal; and transmitting the processed image signal to the display apparatus.

According to an aspect of an exemplary embodiment, there is provided a display system including: a display apparatus which includes a first image processor to process an image signal and a display unit to display an image thereon based on the processed image signal; an upgrading apparatus which is connected to the display apparatus and includes a second image processor to process the image signal; and the display apparatus cuts off power supplied to the upgrading apparatus and controls the first image processor to process the image signal upon receiving a user's selection to change the upgrading apparatus from an active mode to a passive mode.

The display apparatus may recognize the connected upgrading apparatus as a storage medium if the upgrading apparatus is changed to a passive mode.

According to the present invention there is provided an apparatus and method as set forth in the appended claims. Other features of the invention will be apparent from the dependent claims, and the description which follows.

### BRIEF DESCRIPTION OF THE DRAWINGS

FIG. 1 is a block diagram of a display system according to an exemplary embodiment;
FIG. 2 is a block diagram of a display system including a display apparatus and an upgrading apparatus according to an exemplary embodiment;
FIG. 3 is a block diagram of a display system including an upgrading apparatus according to another exemplary embodiment;
FIG. 4 illustrates an example of upgrading an image processing operation of the display apparatus by the upgrading apparatus according to an exemplary embodiment;
FIG. 5 illustrates an example of upgrading an image processing operation of the display apparatus by the upgrading apparatus according to an exemplary embodiment;
FIG. 6 illustrates a screen displayed on a display unit;
FIG. 7 illustrates a screen displayed on a display unit; and
FIG. 8 is a flowchart showing a control method of the display system according to an exemplary embodiment.

### DETAILED DESCRIPTION OF EXEMPLARY EMBODIMENTS

Below, certain exemplary embodiments are described in greater detail with reference to the accompanying drawings. Exemplary embodiments may be embodied in various forms without being limited to the exemplary embodiments set forth herein.

In the following description, like reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the description with unnecessary detail.

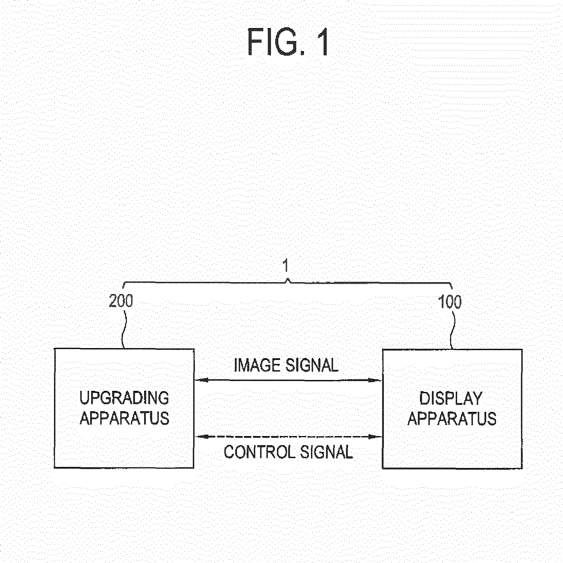

FIG. 1 is a block diagram of a display system 1 according to an exemplary embodiment.

As shown therein, the display system 1 according to the present exemplary embodiment includes a display apparatus 100 and an upgrading apparatus 200. The display apparatus 100 and the upgrading apparatus 200 are connected to each other for communication.

The upgrading apparatus 200 is connected to the display apparatus 100, i.e. an existing device, and acts as an extended device.

The display apparatus 100 and the upgrading apparatus 200 which are connected to each other transmit and receive image signals such as broadcasting signals and control signals including various data and power to and from each other.

The display apparatus 100 processes an image signal provided by an external image supply source 300 according to a preset image processing operation and displays an image based on the processed image signal.

In the display system 1 according to the present exemplary embodiment, the display apparatus 100 includes a TV which displays a broadcasting image based on broadcasting signals, broadcasting information, and/or broadcasting data transmitted by a transmission device of a broadcasting station. However, an exemplary embodiment is not limited to the above-described display apparatus 100. In addition to the TV, the display apparatus 100 may include other various types of embodiments which may display an image.

The display apparatus 100 may display other images as well as a broadcasting image. For example, the display apparatus 100 may display video, still images, applications and on-screen display (OSD) based on signals and/or data supplied by various image supply sources, and a graphic user interface (GUI) for controlling various operations, but not limited thereto.

The upgrading apparatus 200 is connected to the display apparatus 100 for communication. The upgrading apparatus 100 upgrades existing hardware and/or software of the connected display apparatus 100, and enables the upgraded hardware and/or software of the display apparatus 100 to process an image signal to thereby display an image with better quality.

For example, the upgrading apparatus 200 may include an image processing circuit which upgrades hardware of a TV, and may be detached from the display apparatus 100.

The upgrading apparatus 200 may be connected to the display apparatus 100 in a wireless manner, and may receive power from an additional, external power source or a battery. However, in the present exemplary embodiment, the upgrading apparatus 200 is connected to the display apparatus 100 in a wired manner.

The display apparatus 100 may process an image signal transmitted from the outside, according to a preset image processing operation, and display an image.

According to the present exemplary embodiment, as the upgrading apparatus 200 is connected to the display apparatus 100, hardware and/or software of the display system 1 performing the image processing operation are upgraded. The upgrading apparatus 200 receives from the display apparatus 100 and processes an image signal, and transmits the processed image signal to the display apparatus 100. The display apparatus 100 displays an image corresponding to the image signal transmitted by the upgrading apparatus 200. Thus, an image with better quality may be provided to a user.

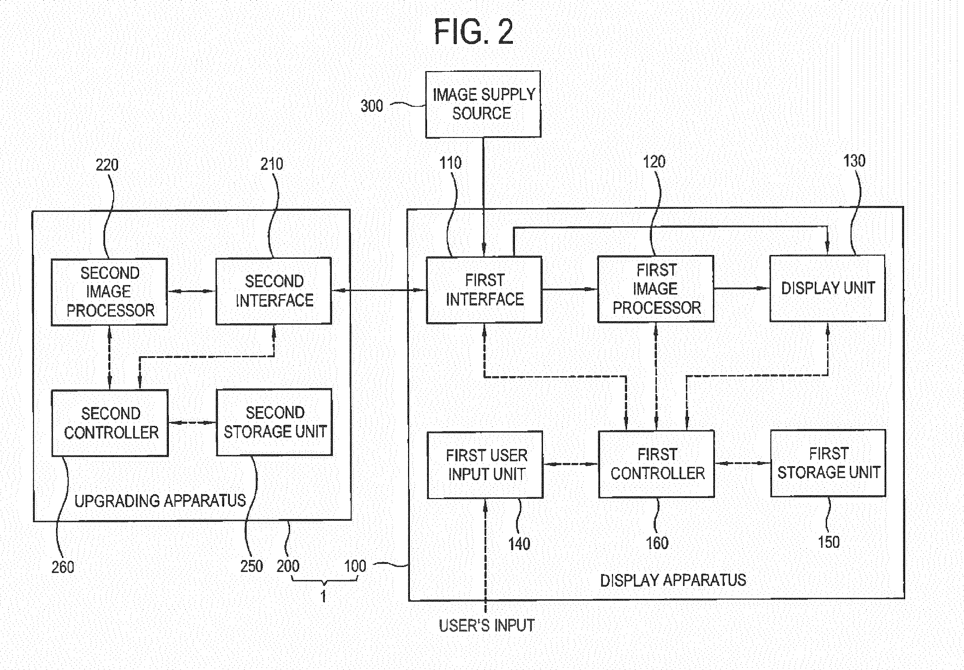

FIG. 2 is a block diagram of the display apparatus 100 and the upgrading apparatus 200 forming the display system 1 according to an exemplary embodiment.

As shown therein, the display apparatus 100 includes a first interface 110 to which at least one image supply source 300 is connected, a first image processor 120 which processes an image signal transmitted by the image supply source 300 through the first interface 110, a display unit 130 which displays an image based on the image signal processed by the first image processor 120, a first user input unit 140 which outputs a preset command according to a user's input, a first storage unit 150 which stores therein data and/or information, and a first controller 160 which controls operations of overall elements of the display apparatus 100.

The first interface 110 is an input/output (I/O) device which transmits an image signal from the at least one image supply source 300 to the first image processor 120, and varies corresponding to a standard of a received image signal or an embodiment type of the image supply source 300 and the display apparatus 100. For example, the first interface 110 may receive signals and/or data according to standards such as high definition multimedia interface (HDMI), universal serial bus (USB), component, etc., and may include a plurality of connection terminals (not shown) corresponding to the foregoing standards. As various external devices including the image supply source 300 are connected to each connection terminal, communication may be performed through the first interface 110.

That is, the external device which is connected to the first interface 110 is not limited to the image supply source 300, and a device which may transmit and receive signals and/or data to and from the display apparatus 100 through the first interface 110 may be connected to the first interface 110. According to the present exemplary embodiment, the upgrading apparatus 200 may be connected to the first interface 110.

The first image processor 120 processes an image signal transmitted by the first interface 110, according to preset various image processing operations. The first image processor 120 outputs the processed image signal to the display unit 130, to display an image on the display unit 130 corresponding to the image signal.

The image processing operations of the first image processor 120 include a de-multiplexing operation to divide a predetermined signal into signals by nature, a decoding operation corresponding to an image format of an image signal, a de-interlacing operation to convert an interlace image signal into a progressive image signal, a scaling operation to scale an image signal into a preset resolution, a noise reduction operation to improve an image quality, a detail enhancement operation and a frame refresh rate conversion operation, but not limited thereto.

The first image processor 120 includes an image processing board (not shown) which is formed by a printed circuited board (not shown) in which various chipsets (not shown), memory (not shown), electronic parts (not shown) and wirings (not shown) are mounted.

The display unit 130 displays an image thereon based on an image signal output by the first image processor 120. The display unit 130 may include liquid crystal, plasma, light-emitting diode, organic light-emitting diode, surface-conduction electron-emitter, carbon nano-tube, and nano-crystal, but not limited thereto.

The display unit 130 may further include additional elements depending on its embodiment type. For example, if the display unit 130 includes liquid crystal, it may further include a liquid crystal display (LCD) panel (not shown), a backlight (not shown) emitting light to the LCD panel, and a panel driving substrate (not shown) driving the LCD panel.

The first user input unit 140 transmits preset various control commands or information to the first controller 160 by a user's manipulation and input. The first user input unit 140 may include a menu key and an input panel installed in an external side of the display apparatus 100 or a remote controller which is separated from the display apparatus 100.

The first user input unit 140 may be integrally formed in the display unit 130 as applicable. That is, if the display unit 130 includes a touch screen, a user may transmit a preset command to the first controller 160 through an input menu (not shown) displayed on the display unit 130.

The first user input unit 140 according to the present exemplary embodiment includes user interfaces (UI) 50, 51, 52 and 53 which are displayed on the display unit 130 for a user to select a mode of the upgrading apparatus 200.

The first storage unit 150 stores data by a control of the first controller 160. The first storage unit 150 may include a non-volatile memory such as a flash memory or a hard disc drive. The first storage unit 150 is accessed by the first controller 160, to read, record, modify, delete, and/or update data.

For example, the first storage unit 150 may store therein an operating system to drive the display apparatus 100 and other various applications which may be executed in the operating system, and image data and additional data.

The first controller 160 performs control operations for various elements of the display apparatus 100. For example, the first controller 160 controls the first image processor 120 to process an image signal, transmits and receives signals, information, and/or data through the first interface 110, and performs a control operation corresponding to a command of the first user input unit 140 to thereby control entire operations of the display apparatus 100.

Upon receiving a user's selection for a change of the mode of the upgrading apparatus 200, the first controller 160 according to an exemplary embodiment transmits a command through the first interface 110 to operate the upgrading apparatus 200 in the changed mode.

Generally, various components of the display apparatus 100 need to be upgraded, with the development of technology, over time. For example, such upgrade may be needed when the display apparatus 100 receives an image signal in a new format that was not offered at the time of manufacturing of the display apparatus 100, receives an image signal with a resolution higher than the level supported by the display apparatus 100 in accordance with a new trend requiring a high quality image, and attempts to reduce the system load thereof.

Such upgrade of the display apparatus 100 may be considered from perspectives of both hardware and software. According to an exemplary embodiment, the upgrading apparatus 200 which upgrades the display apparatus 100 is connected to the first interface 110 and upgrades at least one of existing hardware elements and software elements of the display apparatus 100.

The upgrading apparatus 200 includes hardware and/or software elements corresponding to at least a part of hardware and/or software resources of the display apparatus 100. The elements of the upgrading apparatus 200 may perform improved functions compared to some of the resources of the display apparatus 100. Upon connection to the display apparatus 100, the upgrading apparatus 200 replaces at least a part of the existing resources of the display apparatus 100 and ultimately improves quality of an image displayed in the display apparatus 100.

Hereinafter, elements of the upgrading apparatus 200 will be described.

The upgrading apparatus 200 includes a second interface 210 which is connected to the first interface 110 of the display apparatus 100, a second image processor 220 which performs operations corresponding to at least a part of the image processing operations of the first image processor 120, a second storage unit 250 which stores data and/or information, and a second controller 260 which controls overall operations of the upgrading apparatus 200.

The second interface 210 is connected to the first interface 110 to enable communication between the upgrading apparatus 200 and the display apparatus 100. The second interface 210 may be connected to at least one of a plurality of connection terminals (not shown) of the first interface 110.

For example, among the plurality of connection terminals of the first interface 110, the second interface 210 may be connected to an HDMI terminal (not shown) to transmit and receive image signals to and from the display apparatus 100, and may be connected to a USB terminal (not shown) to transmit and receive data and power to and from the display apparatus 100. However, this is an example, and the connection method of the first and second interfaces 110 and 210 may vary.

The second image processor 220 may perform a second process corresponding to a first process which is performed by the first image processor 120 of the display apparatus 100. The first and second processes are named for convenience purpose only to distinguish them, and may include a single unit process or a plurality of unit processes. The second process is an improved process as compared to the first process, and such improvement is realized by improvement of hardware such as with more advanced chipsets or improvement of software such as by advanced algorithms, execution codes, and/or software programs.

If the display apparatus 100 and the upgrading apparatus 200 are connected to each other, the second image processor 220 performs the second process rather than the first process, according to a control of the first controller 160 or the second controller 260. The second process which is improved in function compared to the first process is performed instead of the first process, and as a result the entire image processing operation may improve. This will be described in detail below.

The second storage unit 250 stores data. The second storage unit 250 includes a non-volatile storage medium such as a flash memory, a hard disc drive, etc. The second storage unit 250 is accessed by the first controller 160 or the second controller 260, which reads, records, modifies, deletes, and/or updates data stored in the second storage unit 250. The first storage unit 150 may be accessed by the second controller 260 as well as by the first controller 160 depending on its embodiment type.

The second controller 260 performs control operations for various elements of the upgrading apparatus 200 to perform entire image processing operations. For example, the second controller 260 controls the second image processor 220 to process an image signal, and transmits and receives signals, information, and/or data through the second interface 210, to thereby control entire operations of the display apparatus 100.

The second controller 260 and the first controller 160 may include a central processing unit (CPU). If the second controller 260 performs an improved function compared to the first controller 160, the second controller 260 may disable the first controller 160 and may control the entire operations of the display system 1 on behalf of the first controller 160. Otherwise, the second controller 260 may, together with the first controller 160, control the entire operations of the display system 1.

The second controller 260 and the first controller 160 may further include a graphic processing unit (GPU) and a digital signal processor which assist the CPU, and a memory such as a DDR RAM.

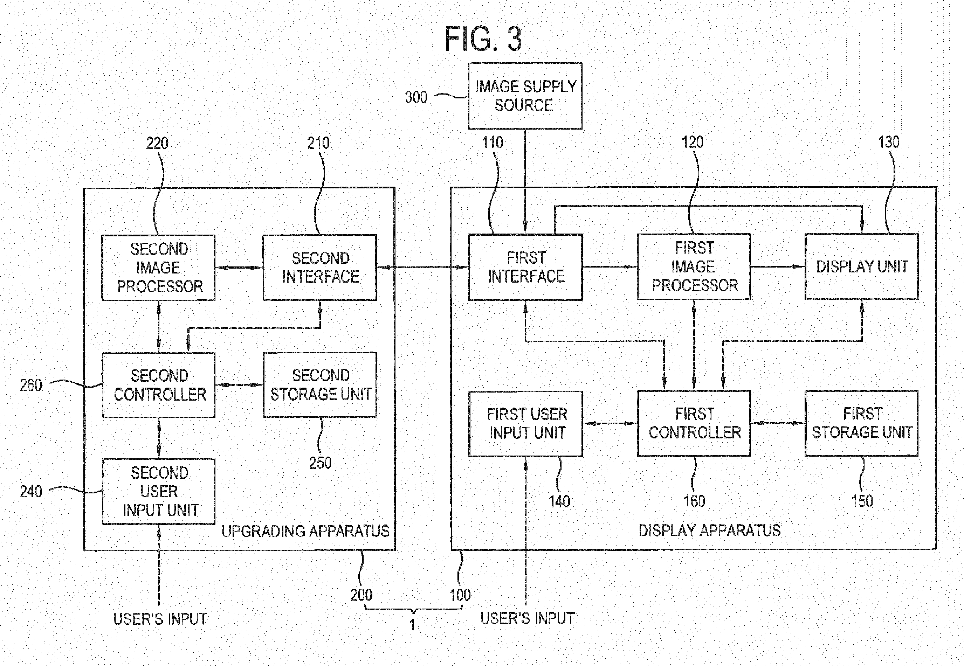

FIG. 3 is a block diagram of the display system 1 including an upgrading apparatus 200 according to another exemplary embodiment.

Compared to the upgrading apparatus 200 according to an exemplary embodiment shown in FIG. 2, the upgrading apparatus 200 according to an exemplary embodiment shown in FIG. 3 further includes a second user input unit 240 to receive a user's input for a selection of a mode of the upgrading apparatus 200. Except for the second user input unit 240, other elements have the same reference numerals and functions as those according to an exemplary embodiment of FIG. 2. Thus, repetitive description will be omitted.

The second user input unit 240 may include a physical switch which is attached to an external surface of the upgrading apparatus 200. For example, the second user input unit 240 may include a button-type toggle switch, or a hardware switch to select on/off status.

The second user input unit 240 according to the present exemplary embodiment includes all types of switches, buttons and input keys which are provided in the upgrading apparatus 200 and may be manipulated by a user, but not limited thereto.

The upgrading apparatus 200 according to the present exemplary embodiment operates in one of an active mode and a passive mode according to a user's selection. In the active mode, the upgrading apparatus 200 is entitled to control a process of software, i.e. to control an image processing operation, and in the passive mode, the display apparatus 100 is entitled to control a process of software.

Upon detecting reception of a user's selection to change the upgrading apparatus 200 from the active mode to the passive mode through the first user input unit 140 or the second user input unit 240, the first controller 160 controls the first interface 110 to cut off power supplied to the upgrading apparatus 200. If the power supplied to the upgrading apparatus 200 is cut off, the upgrading apparatus 200 is recognized as a storage medium (e.g. USB mass storage) connected to the display apparatus 100. Thus, data stored in the second storage unit 250 may be used.

According to an exemplary embodiment, while the upgrading apparatus 200 is connected to the display apparatus 100, the upgrading apparatus 200 is changed from the active mode to the passive mode by a user's selection without rebooting the display apparatus 100.

Upon detecting reception of a user's selection to change the upgrading apparatus 200 from the passive mode to the active mode through the first user input unit 140 or the second user input unit 240, the first controller 160 controls the first interface 110 to supply power to the upgrading apparatus 200. Then, the upgrading apparatus 200 booted and operates in the active mode.

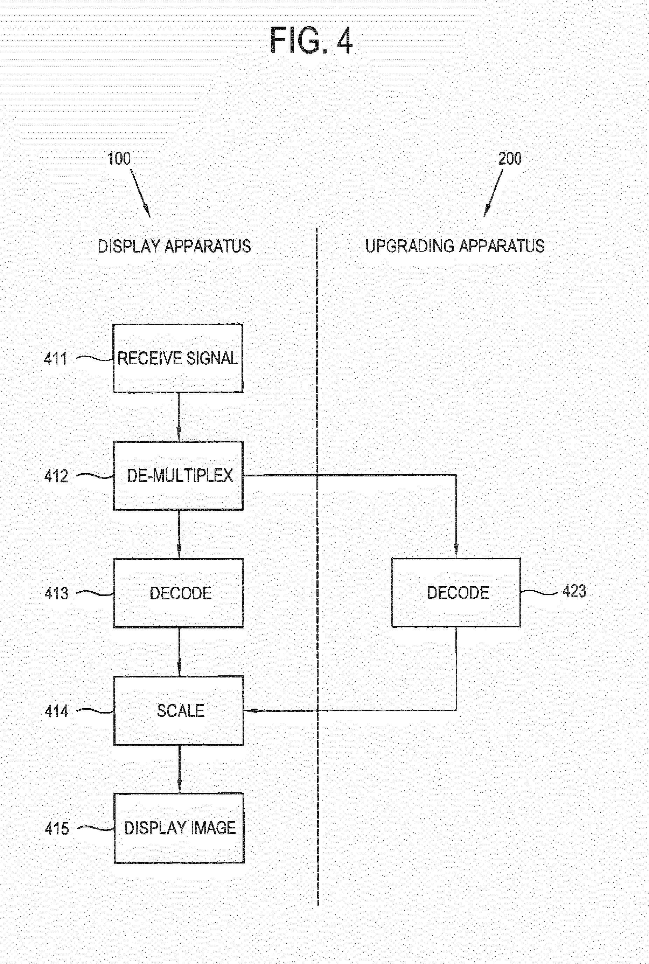

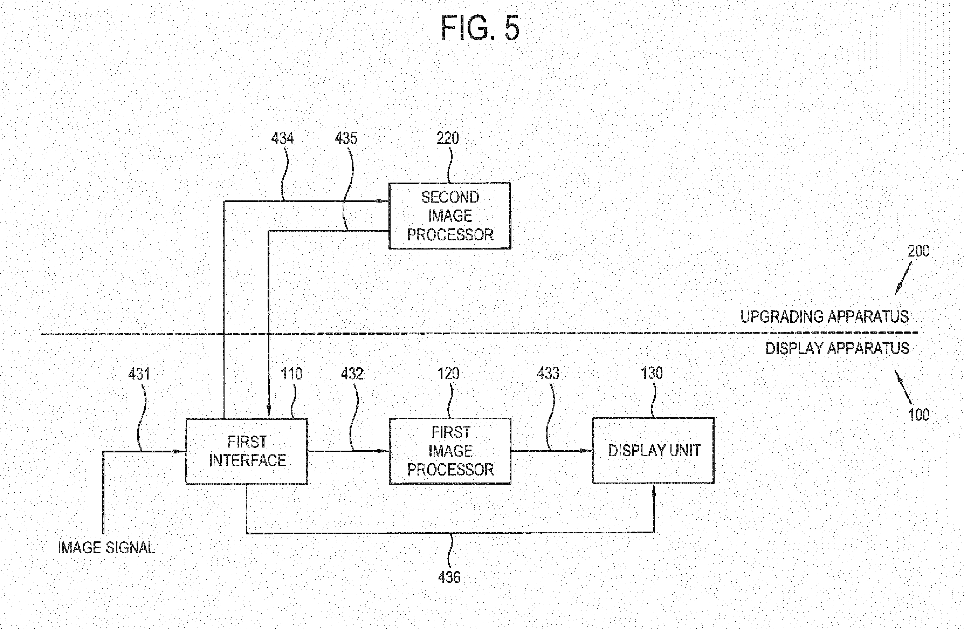

Hereinafter, exemplary embodiments of upgrading the display apparatus 100 by the upgrading apparatus 200 will be described with reference to FIGS. 4 and 5.

FIG. 4 is a flowchart showing a method of upgrading an image processing operation of the display apparatus 100 by the upgrading apparatus 200 in the display system 1 according to an exemplary embodiment.

As shown therein, upon receiving a predetermined signal, e.g., a broadcasting signal from the image supply source 300 (operation 411), the display apparatus 100 processes the signal according to image processing operations 412, 413 and 414 in a sequence. The image processing operations 412, 413 and 414 shown in FIG. 4 are examples to simplify an exemplary embodiment, but do not represent all of the image processing operations performed by the display apparatus 100.

The display apparatus 100 performs a de-multiplexing operation to divide the received broadcasting signal into an image signal, a voice signal and additional data (operation 412). The display apparatus 100 processes the de-multiplexed signal, e.g., decodes the image signal into a preset image format (operation 413). The display apparatus 100 scales the decoded image signal to a predetermined resolution to display an image on the display unit 130 (operation 414) and displays an image based on the scaled image signal (operation 415).

Among a series of sequences, the upgrading apparatus 200 may perform an operation 423 corresponding to the decoding operation 413 of the display apparatus 100. The decoding operation 423 which may be performed by the upgrading apparatus 200 similar to the decoding operation 413 of the display apparatus 100, but the operation 423 may improve the image processing operation.

For example, the operation 423 may process an image signal into a resolution which may not be processed by the operation 413, process an image signal in a format which may not be processed by the operation 413 or grant an additional effect to the image signal which may not be done by the operation 413.

Accordingly, in the sequence of the image processing operations according to the present exemplary embodiment, according to a control of the first controller 160 or the second controller 260, the decoding operation 423 of the upgrading apparatus 200 is performed on behalf of the decoding operation 413 of the display apparatus 100 following the de-multiplexing operation 412. Following the decoding operation 423 of the upgrading apparatus 200, the scaling operation 414 is performed.

In such sequence, image signals and control signals are transmitted and received between the display apparatus 100 and the upgrading apparatus 200, and this is performed according to a control of the first controller 160 or the second controller 260.

Instead of replacing a part of the image processing operations, the second image processor 220 of the upgrading apparatus 200 may replace the first image processor 120 of the display apparatus 100. This will be described with reference to FIG. 5. FIG. 5 is a block diagram of a process of transmitting an image signal to the first interface 110 in the display system 1 according to an exemplary embodiment.

Referring to FIG. 5, if the upgrading apparatus 200 is not connected to the display apparatus 100 or is in the passive mode, an image signal is received by the first interface 110 (operation 431), and transmitted to the first image processor 120 (operation 432). The first image processor 120 processes and outputs the image signal to the display unit 130 (operation 433). The display unit 130 displays an image thereon based on the image signal processed by the first image processor 120.

If the upgrading apparatus 200 is connected to the display apparatus 100 and is in the active mode, an image signal is received by the first interface 110 (operation 431), and transmitted to the second image processor 220 (operation 434). The second image processor 220 performs an image processing operation to the image signal on behalf of the first image processor 120, and the image signal processed by the second image processor 220 is transmitted to the display apparatus 100 (operation 435).

The image signal bypasses the first image processor 120 and is transmitted to the display unit 130 (operation 436), and the display unit 130 displays an image thereon based on the image signal processed by the second image processor 220.

When the display apparatus 100 and the upgrading apparatus 200 are connected to each other, the second controller 260 may disable the first controller 160 and control the first and second image processors 120 and 220. If an operating system (OS) stored in the second storage unit 250 is a version-up of an OS stored in the first storage unit 150, the OS of the first storage unit 150 may be updated to the OS of the second storage unit 250 and the upgraded OS may be driven, or the OS of the second storage unit 250 may be driven on behalf of the OS of the first storage unit 150.

With the foregoing configuration, the upgrading apparatus 200 according to the present exemplary embodiment may upgrade the display apparatus 100.

If the upgrading apparatus 200 is connected to the first interface 110 of the display apparatus 100 and is in the active mode, the first controller 160 controls the first interface 110 to transmit to the upgrading apparatus 200 at least a part of the image signal transmitted by the image supply source 300, and to receive the processed image signal from the upgrading apparatus 200, and controls the display unit 130 to display an image corresponding to the image signal processed by the second image processor 220.

If the upgrading apparatus 200 is connected to the first interface 110 of the display apparatus 100 and is in the passive mode, the first controller 160 controls the first image processor 120 to process an image signal transmitted by the image supply source 300, and controls the display unit 130 to display an image corresponding to the image signal processed by the first image processor 120.

A user may manipulate the first user input unit 140 and select to change the mode of the upgrading apparatus 200.

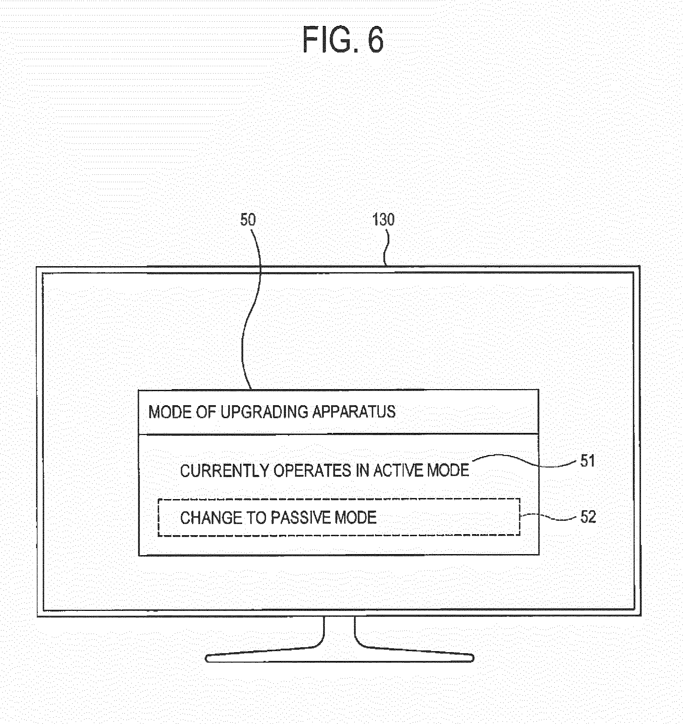

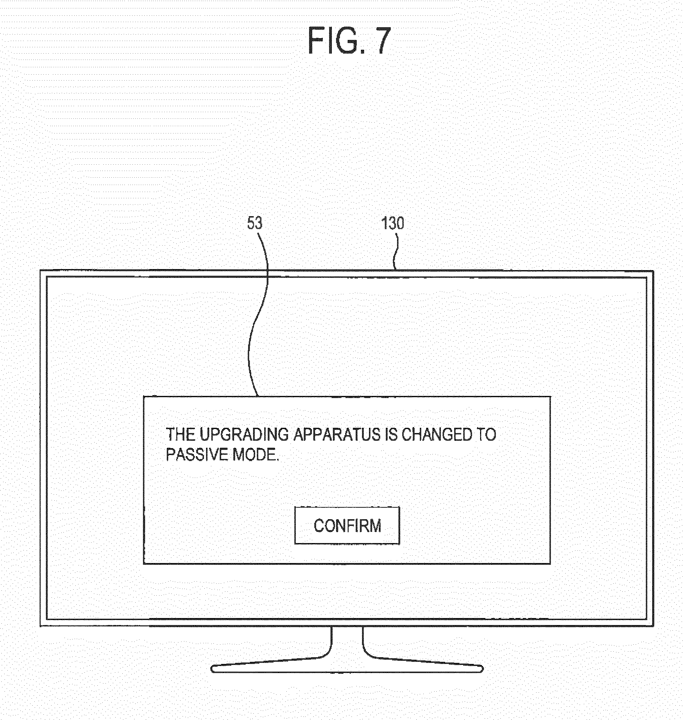

FIGS. 6 and 7 illustrate a screen displayed on the display unit 130.

As shown in FIG. 6, Uls 50, 51 and 52 may be displayed on the display unit 130 for a user to select the mode of the upgrading apparatus 200.

For example, a user may select a menu key of a remote controller as the first user input unit 140 and select a menu of the mode of the upgrading apparatus 200 among setup menus.

Corresponding to a user's selection of the menu, the first controller 160 displays on the display unit 130 the UI 50 of the mode of the upgrading apparatus 200. Referring to FIG. 6, the UI 50 of the mode of the upgrading apparatus 200 may include an item 51 for a current operation mode, and an item 52 for changing the mode.

A user may manipulate the first user input unit 140 and select the change of the mode of the upgrading apparatus 200 from the Ul 50 of the display unit 130. For example, if the first user input unit 140 includes a remote controller, a user may manipulate a direction key of the remote controller, move a highlight, including a focus, displayed in the items 51 and 52 of the UI 50, and manipulate an enter key and select one of the highlighted items, i.e., the item 52 of the conversion from the active mode to the passive mode.

Corresponding to the selected item 52, the first controller 160 controls the display unit 130 to display the UI 53 representing the change of the upgrading apparatus 200 to the passive mode as shown in FIG. 7. If a user selects confirm, or after a pre-specified time period expires, the upgrading apparatus 200 is changed to the passive mode.

The first controller 160 changes the mode of the upgrading apparatus 200 corresponding to the selected item 52. For example, if the mode is changed from the active mode to the passive mode, the first controller 160 controls the first interface 110 not to supply power to the upgrading apparatus 200 and controls the first image processor 120 to process an image signal transmitted by the image supply source 300, rather than transmitting the image signal to the upgrading apparatus 200. The first controller 160 controls the display unit 130 to display an image thereon corresponding to the image signal processed by the first image processor 120.

In an exemplary embodiment shown in FIGS. 6 and 7, the upgrading apparatus 200 is changed from the active mode to the passive mode, but not limited thereto. For example, the upgrading apparatus 200 may be changed from the passive mode to the active mode.

If a user selects the change of the upgrading apparatus 200 from the passive mode to the active mode, the first controller 160 supplies power to, and boots, the upgrading apparatus 200. The first controller 160 controls the first interface 110 to transmit to the upgrading apparatus 200 the image signal transmitted by the image supply source 300 and to receive the processed image signal from the upgrading apparatus 200. The first controller 160 controls the display unit 130 to display an image thereon corresponding to the image signal transmitted by the upgrading apparatus 200.

A user may manipulate the second user input unit 240 and select the change of the mode of the upgrading apparatus 200.

For example, a user may manipulate a switch as the first user input unit 140 provided in an external surface of the upgrading apparatus 200 and select the change of the mode of the upgrading apparatus 200.

The second controller 260 transmits a command to the display apparatus 100 corresponding to a user's selection. The transmitted command is a command which changes the upgrading apparatus 200 from the active mode to the passive mode or from the passive mode to the active mode. For example, if the upgrading apparatus 200 is changed from the active mode to the passive mode, the second controller 260 may transmit a command to cut off power supplied to the upgrading apparatus 200 and to process the image signal by the first image processor 120.

Based on the command transmitted by the upgrading apparatus 200, the first controller 160 changes the mode of the upgrading apparatus 200 corresponding to the user's selection. For example, if the mode is changed from the active mode to the passive mode, the first controller 160 controls the first interface 110 not to supply power to the upgrading apparatus 200 and controls the first image processor 120 to process an image signal transmitted by the image supply source 300 rather than transmitting the image signal to the upgrading apparatus 200. The first controller 160 controls the display unit 130 to display an image thereon corresponding to the image signal processed by the first image processor 120.

The first controller 160 may display on the display unit 130 the UI 53 showing the change of the mode of the upgrading apparatus 200 as shown in FIG. 7.

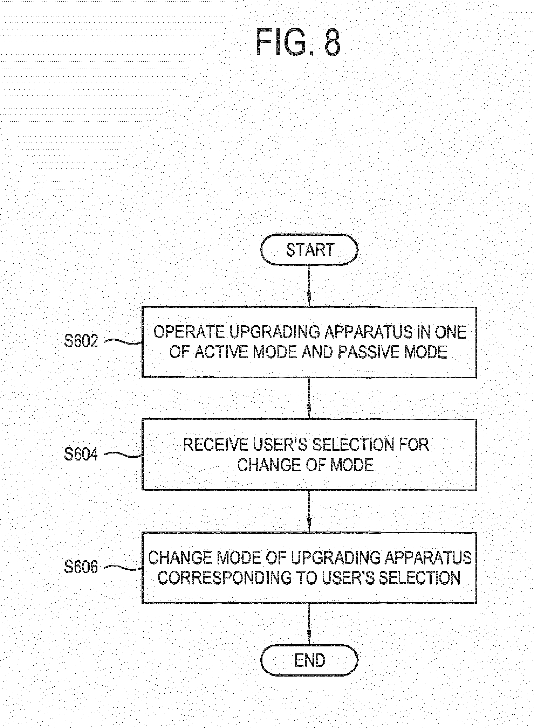

Hereinafter, a control method of the display system 1 according to an exemplary embodiment will be described with reference to FIG. 8.

If the upgrading apparatus 200 is connected to the first interface 110 of the display apparatus 100 to upgrade hardware and/or software, the upgrading apparatus 200 operates in one of the active mode and the passive mode (operation S602).

A user may select change of the mode of the upgrading apparatus 200 from the mode at operation S602 to another mode (operation S604). A user selects the Uls 50, 51, 52 and 53 displayed on the display unit 130 through the remote controller, or manipulates a toggle switch of the upgrading apparatus 200 to select the change of the mode.

The first controller 160 changes the mode of the upgrading apparatus 200 corresponding to the selection made at operation S604 (operation S606). The first controller 160 may change the mode of the upgrading apparatus 200 without rebooting the display apparatus 100 and display on the display unit 130 a UI showing the change result.

According to an exemplary embodiment, the active and passive modes of the upgrading apparatus 200 are changed without removing the upgrading apparatus 200 and without rebooting the display apparatus 100, and the upgrading apparatus 200 may efficiently respond to various changes and situations, improving user's convenience.

Even in the passive mode in which the upgrading apparatus 200 is not used, the upgrading apparatus 200 as the idle resource is not separated and is used as a storage medium, improving resource usability.

Although a few exemplary embodiments have been shown and described, it will be appreciated by those skilled in the art that various changes in form and detail may be made in these exemplary embodiments without departing from the spirit and scope of the present disclosure, as defined by the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image processor which processes an image signal;
a display unit which displays thereon an image based on the processed image signal;
an interface to which an upgrading apparatus processing the image signal is connected; and
a controller which controls the interface to cut off power supplied to the upgrading apparatus upon receiving a user's selection to change an upgrading apparatus mode from an active mode to a passive mode.

2. The display apparatus according to claim 1, wherein the controller recognizes the connected upgrading apparatus as a storage medium if the upgrading apparatus mode is changed to the passive mode.

3. The display apparatus according to claim 1, wherein the controller controls the image processor to process the image signal rather than transmitting the image signal to the upgrading apparatus if the upgrading apparatus mode is changed to the passive mode.

4. The display apparatus according to claim 1, wherein the controller controls the interface to supply power to the upgrading apparatus upon receiving a user's input to change the upgrading apparatus mode from the passive mode to the active mode.

5. The display apparatus according to one of claims 1 to 4, further comprising a user input unit which receives a user's input regarding a change of the upgrading apparatus mode.

6. An upgrading apparatus of a display apparatus, the upgrading apparatus comprising:
an interface which is connected to the display apparatus displaying an image;
a first image processor which processes an image signal corresponding to an image displayed in the display apparatus; and
a controller which upon receiving a user's selection to change an upgrading apparatus mode from an active mode to a passive mode, controls the interface to transmit a command to process the image signal by a second image processor of the display apparatus.

7. The upgrading apparatus according to claim 6, wherein, upon receiving a user's input to change the upgrading apparatus mode from the passive mode to the active mode, the controller boots the upgrading apparatus, controls the first image processor to receive from the display apparatus and process the image signal, and controls the interface to transmit the processed image signal to the display apparatus.

8. The upgrading apparatus according to claim 7, further comprising a user input unit which receives the user's selection for a change of the upgrading apparatus mode.

9. A control method of a display apparatus, the method comprising:
receiving a user's selection to change a mode of an upgrading apparatus connected to the display apparatus and processing an image signal, from an active mode to a passive mode; and
cutting off power supplied to the upgrading apparatus.

10. The control method according to claim 9, further comprising recognizing the connected upgrading apparatus as a storage medium when the mode of the upgrading apparatus is changed to a passive mode.

11. The control method according to claim 10, further comprising processing the image signal by an image processor of the display apparatus rather than transmitting the image signal to the upgrading apparatus; and
displaying an image corresponding to the processed image signal.

12. The control method according to claim 11, further comprising receiving a user's input to change the mode of the upgrading apparatus from the passive mode to the active mode; and
supplying power to the upgrading apparatus.

13. The control method according to claim 12, further comprising transmitting the image signal from an image supply source to the upgrading apparatus;
receiving the processed image signal from the upgrading apparatus; and
displaying the image corresponding to the received image signal.

14. A control method of an upgrading apparatus of a display apparatus, the control method comprising:
receiving a user's selection to change a mode of the upgrading apparatus connected to the display apparatus and processing an image signal, from an active mode to a passive mode; and
transmitting a command to the display apparatus to process an image signal by an image processor of the display apparatus.

15. The control method according to claim 14, further comprising:
receiving a user's input to change the mode of the upgrading apparatus from the passive mode to the active mode;
booting the upgrading apparatus;
receiving the image signal from the display apparatus;
processing the received image signal; and
transmitting the processed image signal to the display apparatus.
